# EUROPEAN PATENT APPLICATION

(11) **EP 3 809 551 A1**
(43) Date of publication of application: **21.04.2021**
(21) Application number: 20202232.3
(22) Date of filing: 16.10.2020
(51) Int. Cl.: H02H 7/26, H02H 7/30

(54) **PROTECTION CONTROL DEVICE AND PROTECTION CONTROL METHOD FOR DC TRANSMISSION SYSTEM**

(30) Priority: 18.10.2019 JP 2019191256
(71) Applicant: Hitachi, Ltd., Tokyo 100-8280 (JP)
(72) Inventor: YOSHIHARA, Tohru, Chiyoda-ku,, Tokyo 100-8280 (JP); TOMIYASU, Kunihiko, Chiyoda-ku,, Tokyo 100-8280 (JP)
(74) Representative: Strehl Schübel-Hopf & Partner

(57) **Abstract**

A protection control device and a protection control method for a DC transmission system (102) are capable of, using only local information, distinguishing between and detecting a line accident and a bus accident (601) and identifying an accident line when the line accident occurs. The DC transmission system having a symmetrical unipolar configuration includes a self-excited converter (106) that converts AC to DC, a DC bus (107) connected to a DC terminal of the self-excited converter, a plurality of DC breakers (109Xp, 109Xn, 109Yp, 109Yn) that connects the DC bus and a plurality of DC lines (103Xp, 103Xn, 103Yp, 103Yn), and an AC breaker (105) that connects AC terminals of the self-excited converter and an AC system. In the protection control device, when a bus accident at a positive or negative terminal of the DC bus is detected based on a sum of currents flowing into the positive or negative terminal of the DC bus, the plurality of DC breakers and the AC breaker are opened, and when a line accident of the DC lines is detected based on ground potentials at positive or negative terminals of the DC lines, the DC breaker of a DC line where the accident is detected is opened.

Fig. 1

## Description

### Technical Field

The present invention relates to a protection control device and a protection control method for a DC transmission system in which a power generation system such as a renewable energy power source is connected to an AC system via a power converter and DC transmission lines.

### Background Art

A DC transmission system (HVDC: high voltage direct current) is used to improve efficiency of long-distance transmission and submarine transmission.

Since general power systems are AC systems, in the DC transmission system, power of the AC system is converted to DC by an AC/DC converter and then transmitted.

In the old days, the AC/DC converter used in the DC transmission system is mainly a separately-excited AC/DC converter using a thyristor, but in recent years, introduction of a self-excited AC/DC converter using an insulated gate bipolar transistor (IGBT) has increased, and a self-excited DC transmission system has been formed.

As the AC/DC converter used in the self-excited DC transmission system, a modular multilevel converter (MMC) is increasingly applied as a form having few harmonics and suitable for large capacity and high voltage.

In the related art, one-to-one power transmission connecting two points on a one-to-one basis is the mainstream as a power transmission form of the DC transmission system, but in recent years, the scale and capacity of the DC transmission systems have been increased, and a multi-terminal DC transmission system connecting three or more points has attracted attention as a power transmission form.

PTL 1 describes a protection control device for protecting the DC transmission system by identifying and then selectively disconnecting an accident section when an accident occurs in the DC transmission system. In a method in PTL 1, currents at both ends of a DC line are monitored. When a current difference between current detection values of two current detectors exceeds a specified value, it is determined that a DC line accident occurs.

### Citation List

### Patent Literature

PTL 1: JP-A-2006-288099

### Summary of Invention

### Technical Problem

One of operational objects of the multi-terminal DC transmission system is continuation of operation of the entire system during the DC line accident.

The basic idea of the continuation of operation of the entire system during the DC line accident is the same as that of the AC system in the related art, which is to selectively and quickly disconnect the accident section and continue operation in remaining sound parts.

Unlike the AC systems, the multi-terminal DC transmission systems are interconnected via the AC/DC converters. In order to protect the AC/DC converter from overcurrent and overvoltage and prevent the accident from spreading, it is generally necessary to selectively disconnect the accident section within a few ms from the occurrence of the accident.

However, in this regard, the method in PTL 1 requires monitoring the currents at the both ends of the DC line, and in order to selectively disconnect the accident section within a few ms from the occurrence of the accident, high-speed and synchronized communication means are required, and cost is inevitable to be high.

PTL 1 only mentions the accident on a DC line, and does not mention any method for detecting an accident on a DC bus.

Accordingly, the invention aims to provide a protection control device and a protection control method for a DC transmission system that are capable of, using only local information, distinguishing between and detecting a line accident and a bus accident, and identifying an accident line when the line accident occurs.

### Solution to Problem

The invention provides a protection control device for a DC transmission system having a symmetrical unipolar configuration, the DC transmission system including a self-excited converter that converts AC to DC, a DC bus connected to a DC terminal of the self-excited converter, a plurality of DC breakers that connects the DC bus and a plurality of DC lines, and an AC breaker that connects AC terminals of the self-excited converter and an AC system, in which when a bus accident at a positive or negative terminal of the DC bus is detected based on a sum of currents flowing into the positive or negative terminal of the DC bus, the plurality of DC breakers and the AC breaker are opened, and when a line accident of the DC lines is detected based on ground potentials at positive or negative terminals of the DC lines, the DC breaker of a DC line where the accident is detected is opened.

### Advantageous Effect

The invention can provide a protection control device and a protection control method for a DC transmission system that are capable of, using only local information, distinguishing between and detecting a line accident and a bus accident, and identifying an accident line when the line accident occurs.

### Brief Description of Drawings

[FIG. 1] FIG. 1 is a diagram showing a configuration example of a DC transmission conversion station according to an embodiment of the invention.
[FIG. 2] FIG. 2 is a diagram showing an example of an electrical connection configuration of a DC bus according to the embodiment of the invention.
[FIG. 3] FIG. 3 is a diagram showing a configuration example of an AC/DC converter according to the embodiment of the invention.
[FIG. 4] FIG. 4 is a diagram showing a configuration example of a unit converter according to the embodiment of the invention.
[FIG. 5] FIG. 5 is a diagram showing a method for detecting a DC line accident and protection control according to the embodiment of the invention.
[FIG. 6] FIG. 6 is a diagram showing an electric circuit around a DC bus 107 when a DC bus accident occurs.
[FIG. 7] FIG. 7 is a diagram showing a configuration example of a DC bus accident detection unit according to the embodiment of the invention.
[FIG. 8] FIG. 8 is a diagram showing an electric circuit around a DC line when the DC line accident occurs.
[FIG. 9] FIG. 9 is a diagram showing a concept of ground potential change in a time sequence when the DC line accident occurs.
[FIG. 10] FIG. 10 is a diagram showing a configuration example of a DC line accident detection unit according to the embodiment of the invention.
[FIG. 11] FIG. 11 is a diagram showing a configuration example of a DC breaker control unit according to the embodiment of the invention.

### Description of Embodiments

An embodiment of the invention will be described below with reference to the drawings. The following embodiment shows one form of the invention, and the invention includes other forms as long as these forms do not deviate from the gist of the invention.

In the following description, "AC" refers to three-phase AC unless otherwise specified. In the following description, in order to simplify the description, voltage values are described using numerical values. All the voltage values are expressed in arbitrary units, and the unit is [a.u.]. The numerical values are used to indicate an example of implementation of the invention, and the embodiment of the invention does not limit the numerical values.

### [Embodiment]

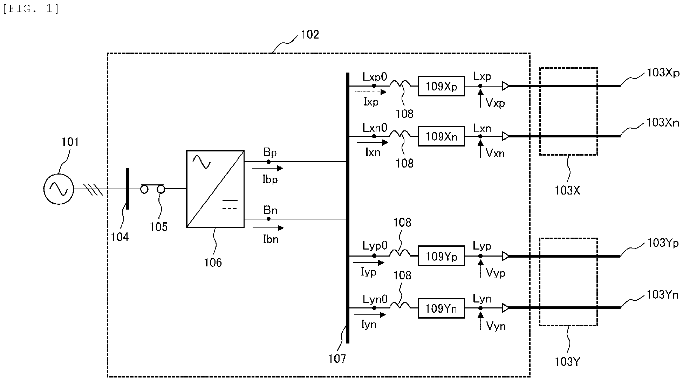

The embodiment of the invention will be described with reference to FIGS. 1 to 11. First, FIG. 1 will be described.

FIG. 1 shows a configuration example of a DC transmission conversion station as a main component in a DC transmission system to which the invention can be applied, and shows a case as an example in which, in a DC transmission conversion station 102, an AC system 101 is connected to a plurality of DC lines (two lines are shown in FIG. 1) which are circuits 103X and 103Y via an AC/DC converter 106.

The DC transmission conversion station 102 according to the embodiment of the invention has a configuration generally called a symmetrical unipolar configuration. In two lines (103Xp and 103Xn of the 103X, and 103Yp and 103Yn of the 103Y) on a DC side, one line (the 103Xp of the 103X, and the 103Yp of the 103Y) is controlled to have a ground potential of approximately 1.0 [a.u.], and the other line (the 103Xn of the 103X, the 103Yn of the 103Y) is controlled to have a ground potential of approximately -1.0 [a.u.].

Hereinafter, in this description, in order to distinguish the two lines on the DC side, a line maintained at approximately 1.0 [a.u.], a device connected thereto, and the like are referred to as a "positive" line and device and are designated by a symbol p, whereas a line maintained at approximately -1.0 [a.u.], a device connected thereto, and the like are referred to as a "negative" line and device and are designated by a symbol n. In this description, one of the two circuits is described as a circuit X, and the other one of the two circuits is described as a circuit Y.

The DC transmission system in FIG. 1 includes the AC system 101, the DC transmission conversion station 102, the DC circuit 103X, and the DC circuit 103Y.

The DC transmission conversion station 102 includes an AC bus 104, an AC breaker 105, the AC/DC converter 106, a DC bus 107, DC reactors 108, and DC breakers 109 (a positive DC breaker 109Xp of the DC circuit X, a negative DC breaker 109Xn of the DC circuit X, a positive DC breaker 109Yp of the DC circuit Y, and a negative DC breaker 109Yn of the DC circuit Y).

The DC circuit 103X includes the positive line 103Xp and the negative line 103Xn, and the DC circuit 103Y includes the positive line 103Yp and the negative line 103Yn.

The DC breakers 109 according to the embodiment of the invention are capable of receiving an opening command or a closing command of a breaker from outside and then opening or closing the breaker. For example, a semiconductor DC breaker including a semiconductor element and a resistor can be applied.

Regarding symbol notations in FIG. 1, in electrical connection points between the AC/DC converter 106 and the DC bus 107, a positive connection point is referred to as Bp, and a negative connection point is referred to as Bn. In electrical connection points between the DC bus 107 and the DC reactors 108, an electrical connection point connected to the positive line 103Xp of the DC circuit X is referred to as Lxp0, an electrical connection point connected to the negative line 103Xn of the DC circuit X is referred to as Lxn0, an electrical connection point connected to the positive line 103Yp of the DC circuit Y is referred to as Lyp0, an electrical connection point connected to the negative line 103Yn of the DC circuit Y is referred to as Lyn0, an electrical connection point between the positive DC breaker 109Xp of the DC circuit X and the positive line 103Xp of the DC circuit X is referred to as Lxp, an electrical connection point between the negative DC breaker 109Xn of the DC circuit X and the negative line 103Xn of the DC circuit X is referred to as Lxn, an electrical connection point between the positive DC breaker 109Yp of the DC circuit Y and the positive line 103Yp of the DC circuit Y is referred to as Lyp, and an electrical connection point between the negative DC breaker 109Yn of the DC circuit Y and the negative line 103Yn of the DC circuit Y is referred to as Lyn.

As symbols for currents and voltages in FIG. 1, a current flowing through the connection point Bp is referred to as Ibp, a current flowing through the connection point Bn is referred to as Ibn, a current flowing through the connection point Lxp0 is referred to as Ixp, a current flowing through the connection point Lxn0 is referred to as Ixn, a current flowing through the connection point Lyp0 is referred to as Iyp, a current flowing through the connection point Lyn0 is referred to as Iyn, a ground potential of the connection point Lyp is referred to as Vyp, and a ground potential of the connection point Lyn is referred to as Vxn.

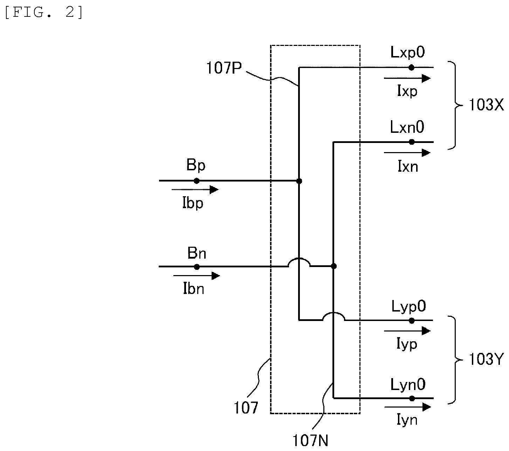

FIG. 2 shows an electrical connection configuration of the DC bus 107. In FIG. 2, the DC bus 107 includes a positive DC bus 107P and a negative DC bus 107N, and the plurality of DC circuits 103X and 103Y are connected to each of the positive and negative buses. Symbols in FIG. 2 are similar to the symbols in FIG. 1. According to Laws of Kirchhoff, the Ibp is equal to the sum of the Ixp and the Iyp, and the Ibn is equal to the sum of the Ixn and the Iyn.

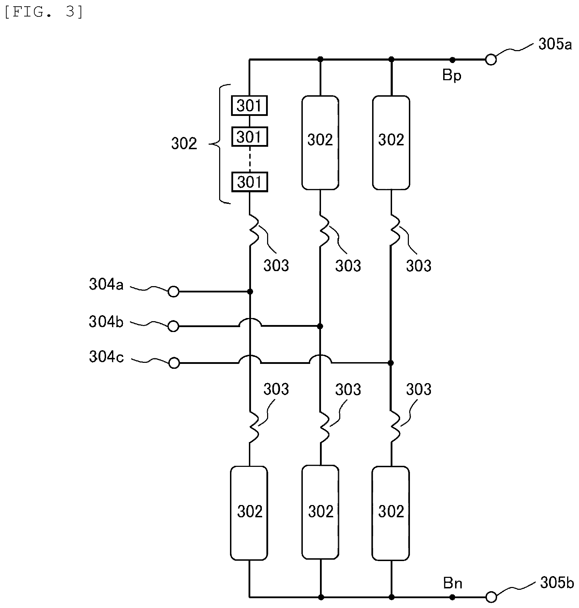

Next, a configuration example of the AC/DC converter 106 according to the embodiment of the invention will be described with reference to FIG. 3. The configuration example of the AC/DC converter in FIG. 3 is a configuration generally called a modular multilevel converter.

The AC/DC converter in FIG. 3 includes unit converters 301, arms 302, reactors 303, an A-phase AC connection terminal 304a, a B-phase AC connection terminal 304b, a C-phase AC connection terminal 304c, a DC positive connection terminal 305a, and a DC negative connection terminal 305b. The DC positive connection terminal 305a corresponds to the connection point Bp in FIG. 2, and the DC negative connection terminal 305b corresponds to the connection point Bn in FIG. 2.

In addition to the power converter shown in FIG. 3, the AC/DC converter may be provided with other electrical equipment and protection devices such as a circuit breaker and a transformer as long as these electrical equipment and protection devices do not deviate from the embodiment of the invention. Each arm 302 is a series connection circuit of the unit converters 301, and FIG. 2 shows an example in which N unit converters 301 are connected in series.

In FIG. 3, six arms 302 are provided. One end of each of three of the six arms 302 is electrically connected to a respective one of the different reactors 303, and the other one end thereof is electrically connected to the DC positive connection terminal 305a. These three reactors are called a first set of reactors. One end of each of remaining three of the six arms 302 is electrically connected to a respective one of the different reactors 303, and the other one end thereof is electrically connected to the DC negative connection terminal 305b. These three reactors are called a second set of reactors.

The first set of reactors and the second set of reactors are electrically connected to each other in a one-to-one way, and each of three connection points are electrically connected to a respective one of the A-phase AC connection terminal 304a, the B-phase AC connection terminal 304b, and the C-phase AC connection terminal 304c.

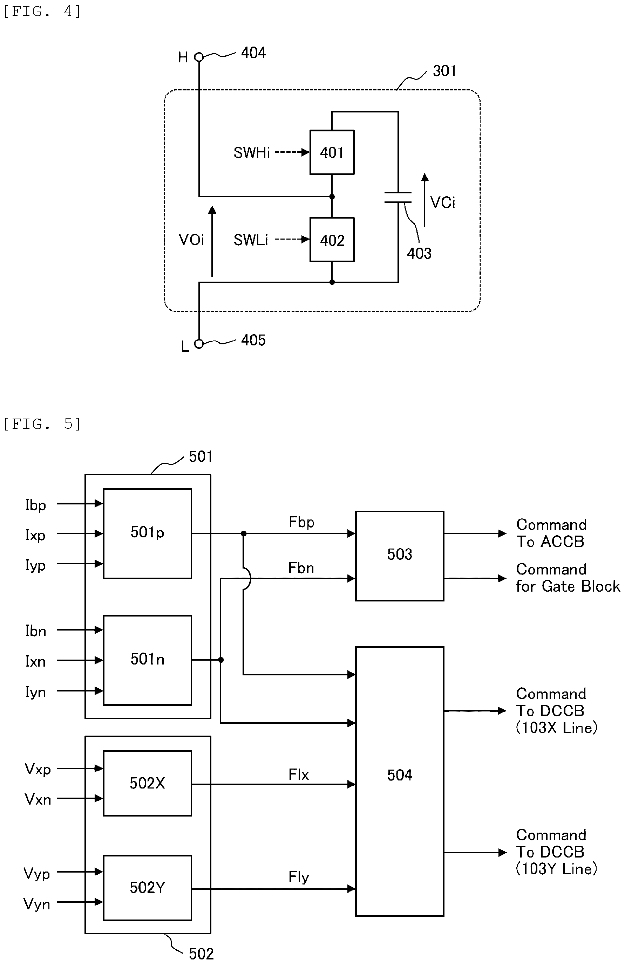

A configuration example and operation of the unit converter 301 according to the embodiment of the invention will be described with reference to FIG. 4. The unit converter in FIG. 4 includes an H-side switching circuit 401, an L-side switching circuit 402, a capacitor 403, an H-side connection terminal 404, and an L-side connection terminal 405.

Regarding symbols in FIG. 4, i is the number of one unit converter 301 in the arm 302 and is an integer from 1 to N. VCi is a capacitor applied voltage of the i-th unit converter 301, VOi is an output voltage of the i-th unit converter 301, and SWHi and SWLi are on/off signals of the H-side switching circuit 401 and the L-side switching circuit 402 in the i-th unit converter 301.

The H-side switching circuit 401 and the L-side switching circuit 402 have a function of switching both ends of the switching circuits to an opening or closing state according to the SWHi and SWLi. The switching circuits can be made of a self-extinguishing element, a diode, and the like.

The modular multilevel converter can output any AC voltage and DC voltage within a range permitted by device configurations and operation by individually controlling output voltages of the unit converters.

An idea of a method for detecting a DC line accident and protection control according to the embodiment of the invention will be described with reference to FIG. 5.

FIG. 5 is a diagram showing a configuration of a protection control device for the DC transmission system according to the embodiment of the invention. The protection control device includes a DC bus accident detection unit 501 (including a positive DC bus accident detection unit 501p and a negative DC bus accident detection unit 501n), a DC line accident detection unit 502 (including an X circuit-side DC line accident detection unit 502X and a Y circuit-side DC line accident detection unit 502Y), a conversion station protection control unit 503, and a DC breaker control unit 504.

As symbols in FIG. 5, Fbp is accident detection information on the positive DC bus, Fbn is accident detection information on the negative DC bus, Fix is accident detection information on the X circuit-side DC line, and Fly is accident detection information on the Y circuit-side DC line. All the accident detection information is 1 if an accident is detected and is 0 otherwise.

Hereinafter, the DC bus accident detection unit 501, the DC line accident detection unit 502, the conversion station protection control unit 503, and the DC breaker control unit 504 will be described.

By the accident detection and protection control shown in FIG. 5, it is expected that in a case of an accident on the bus 107, the DC transmission conversion station 102 is cut off and disconnected from both the AC system and the DC system, and in a case of an accident on the DC line 103, only the DC line of the circuit is cut off and disconnected.

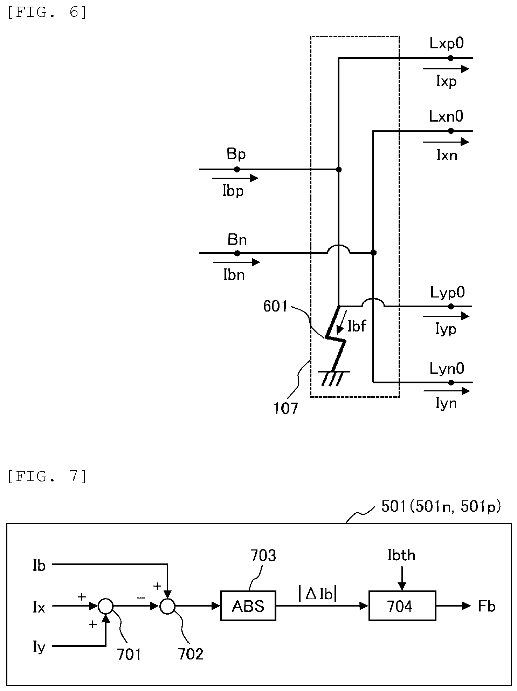

Hereinafter, the DC bus accident detection unit 501 will be described with reference to FIGS. 6 and 7. The DC bus accident detection unit 501 includes the positive DC bus accident detection unit 501p and the negative DC bus accident detection unit 501n, but the positive DC bus accident detection unit 501p and the negative DC bus accident detection unit 501n have the same circuit configuration and only differ in that input and output thereof are a positive bus or a negative bus. First, a basic concept of DC bus accident detection will be described with reference to FIG. 6.

FIG. 6 is a diagram showing an electric circuit around the DC bus 107 when a DC bus accident occurs. FIG. 6 shows an example in which a ground fault 601 occurs on the positive DC bus 107P. As symbols in FIG. 6, a current flowing through the ground fault point 601 is referred to as Ibf.

As compared with that in FIG. 2, on the positive line 107P, the Ibp is not equal to the sum of the Ixp and the Iyp due to the occurrence of the ground fault current Ibf. It is obvious that on the negative line not including the ground fault point, the Ibn is equal to the sum of the Ixn and the Iyn.

The DC bus accident detection according to the embodiment of the invention is detection of the DC bus accident by utilizing a difference between the current flowing from the AC/DC conversion station into the DC bus and the total current flowing from the DC bus into each DC line. The above is the description of FIG. 6.

Next, a configuration example of the DC bus accident detection unit realizing the basic concept of the DC bus accident detection will be described with reference to FIG. 7.

FIG. 7 shows the configuration example of the DC bus accident detection unit according to the embodiment of the invention. The DC bus accident detection unit includes an adder 701, a subtractor 702, an absolute value circuit 703, and a DC bus accident determination circuit 704. In the adder 701 and subtractor 702, a vector sum of the terminal currents is calculated for each of the positive and negative bus, and the DC bus accident determination circuit 704 determines that a magnitude of an absolute value obtained by the absolute value circuit 703 is greater than or equal to a predetermined value.

As symbols in FIG. 7, |ΔIb| is an absolute value of a difference between a current Ib flowing from the AC/DC conversion station into the DC bus and a total current Ix + Iy flowing from the DC bus into each DC line. As described above, the |ΔIb| is approximately 0 when no DC bus accident occurs, but is not 0 when the DC bus accident has occurred. In the embodiment of the invention, when the |ΔIb| exceeds a predetermined threshold value Ibth, it is determined that the DC bus accident has occurred.

As the symbols in FIG. 7, Fb is accident detection information for the DC bus accident. Fb is 1 if it is determined that the DC bus accident has occurred, and is 0 otherwise.

The above is the description of FIG. 7. The above is the description of the DC bus accident detection unit 501.

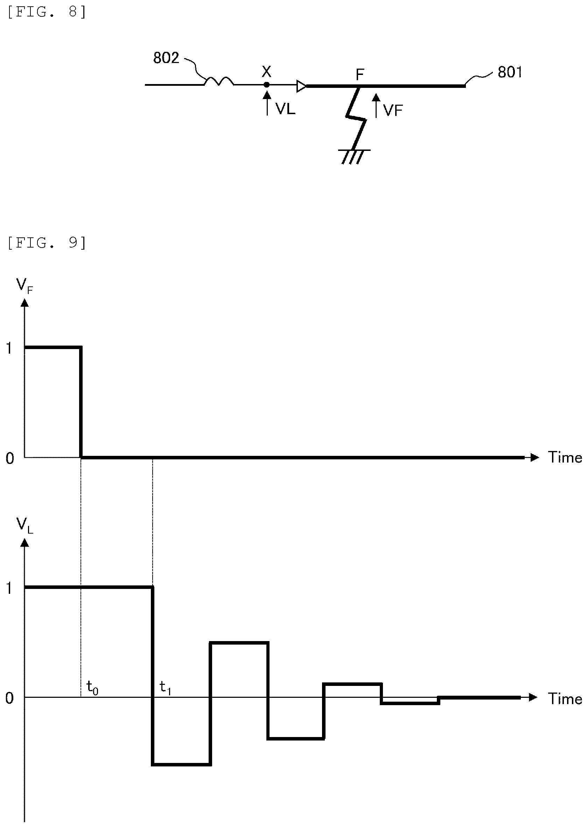

Next, the DC line accident detection unit 502 will be described with reference to FIGS. 8 to 10. First, a basic concept of DC line accident detection will be described with reference to FIGS. 8 and 9.

FIG. 8 shows an electric circuit around a DC line when the DC line accident occurs. The electric circuit shown in FIG. 8 includes a DC line 801 and a reactor 802. FIG. 8 shows an example in which a ground fault occurs at a point F of the DC line 801. As symbols in FIG. 8, a ground potential at the point F is referred to as VF, and a ground potential at an electrical connection point X between the DC line 801 and the reactor 802 is referred to as VL.

Since the accident may occur at any point on the DC line, it is practically difficult to directly measure the potential at this point. Therefore, in general, the ground potential is measured at the connection point X, which is a measurement point in the DC transmission conversion station 102.

FIG. 9 is a conceptual diagram showing changes in a time sequence of the accident point potential VF and the measurement point potential VL when the ground fault occurs at a time t0 at the point F in FIG. 8.

First, when the ground fault occurs at the time t0, the accident point potential VF decreases to near 0. The decrease in the accident point potential VF propagates from the accident point F as a starting point, and the measurement point potential VL decreases at a time (that is, a time t1) when the decrease in the potential reaches the connection point X, which is the measurement point in the DC transmission conversion station 102.

In this case, since impedances of the DC reactor and the DC line are different, potential reflection occurs at the accident point X. After that, reflections and propagations of the potential are repeated between the accident point F and the measurement point X. Since a real DC line has a resistance component, the measurement point potential VL gradually attenuates and finally converges to near 0.

That is, the change in the ground potential due to the DC line accident propagates from the accident point F as the starting point, and the potentials at both ends of the accident point F change first. In other words, since the DC transmission conversion stations at both ends of the accident point F can detect the DC accident earliest in principle, only a relevant section can be selectively opened. The above is the basic concept of the DC line accident detection.

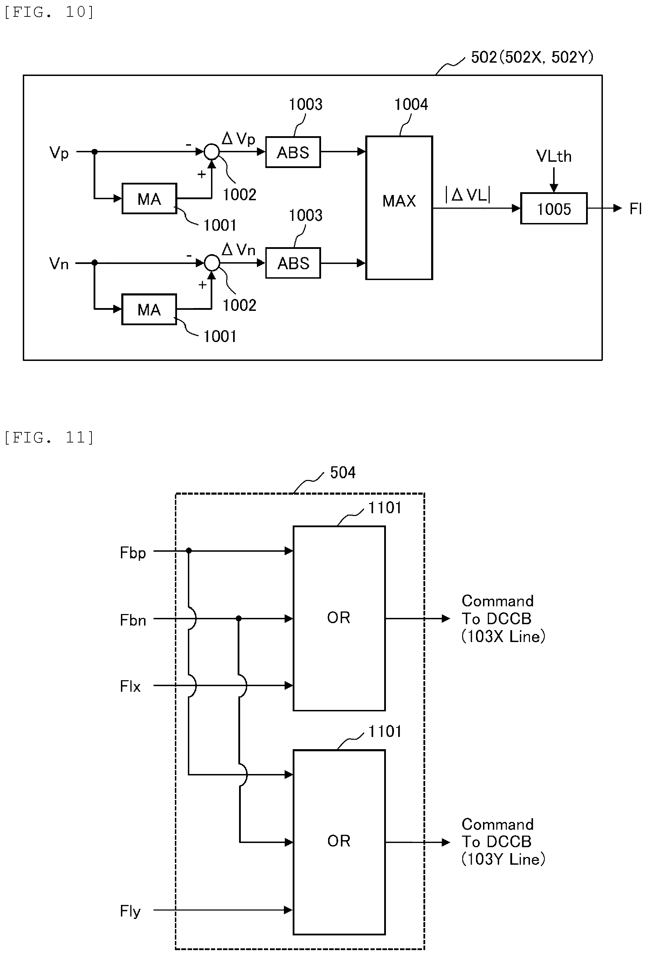

Next, a configuration example of the DC line accident detection unit realizing the basic concept of the DC line accident detection will be described with reference to FIG. 10. The DC line accident detection unit 502 includes the X circuit-side DC line accident detection unit 502X and a Y circuit-side DC line accident detection unit 502Y. However, the X circuit-side DC line accident detection unit 502X and the Y circuit-side DC line accident detection unit 502Y have a same circuit configuration and only differ in that input and output thereof are the X circuit or the Y circuit.

The DC line accident detection unit 502 in FIG. 10 includes moving averaging units 1001, subtractors 1002, absolute value circuits 1003, a comparator 1004, and a DC line accident determination unit 1005. According to this circuit configuration, time-averaged values of a positive voltage Vp and a negative voltage Vn to be input are obtained by the moving averaging units 1001. Time variations are calculated by obtaining differences between the averaged values and current values by the subtractors 1002. Absolute values of the time variations are obtained by the absolute value circuits 1003. A larger absolute value of the time variations is obtained by the comparator 1004. The DC line accident determination unit 1005 determines that the DC line accident occurs on the DC circuit when the larger absolute value is higher than or equal to a predetermined value. The above configuration constitutes a so-called undervoltage relay, but it may be an undervoltage change rate relay that monitors a change rate of undervoltages.

Here, ΔVp and ΔVn in FIG. 10 are differences between the moving averaged values calculated by the moving averaging units 1001 based on each of the Vp and Vn. |ΔVL| in FIG. 10 is a larger value obtained by comparing absolute values of the ΔVp and ΔVn. The |ΔVL| is approximately 0 before the occurrence of the DC line accident, but is not 0 when the DC line accident occurs due to suddenly changes in the Vp and Vn. In the embodiment of the invention, when the |ΔVL| exceeds a predetermined threshold value VLth, it is determined that the DC bus accident has occurred.

As symbols in FIG. 10, FL is accident detection information for the DC bus accident. FL is 1 if it is determined that the DC bus accident has occurred, and is 0 otherwise. The above is the description of FIG. 10.

According to the embodiment of the invention, in order to detect the sudden changes in the Vp and Vn, the moving averaging is used to calculate the |ΔVL|, but a high-pass filter or other signal processing techniques may also be used as a method for calculating the |ΔVL|. The above is the description of the DC bus accident detection unit 502.

Next, the conversion station protection control unit 503 and the DC breaker control unit 504 will be described. According to the embodiment of the invention, the DC transmission conversion station 102 includes, as protection devices, the DC breaker 109 at each DC line 103 and the AC breaker 105 at an AC end of the AC/DC converter 106.

Therefore, when the DC line accident occurs, it is possible to open the DC breaker on the accident line and continue power transmission with the remaining sound DC lines.

On the other hand, when the DC bus accident occurs, the accident point and the DC transmission conversion station cannot be disconnected only by operation of the DC breaker. Therefore, in order to protect the DC transmission conversion station, it is necessary to open all the DC breakers connected to the DC transmission conversion station, gate block the AC/DC converter, open the AC breaker, and cut off the accident current flowing from the AC system toward the DC bus accident point.

From the above, in the conversion station protection control unit 503 shown in FIG. 5, when the DC bus accident detection unit 501 detects the DC bus accident and gives the DC bus accident detection signals Fbp and Fbn, a gate block command is transmitted to the AC/DC converter 106 and an open command is transmitted to the AC breaker 105. Specifically, when a logical sum of the Fbp and the Fbn is 1, the gate block command is transmitted to the AC/DC converter, and the open command is transmitted to the AC breaker.

However, since the above measures are on an AC system side, the DC bus accident detection signals Fbp and Fbn are also given to the DC breaker control unit 504 shown in FIG. 5. The DC breaker control unit 504 to which the DC bus accident detection signals Fbp and Fbn are given opens all the DC breakers in order to open all the DC lines as described later. Accordingly, when an accident occurs on the bus 107, the DC transmission conversion station 102 is cut off and disconnected from both the AC system and the DC system.

FIG. 11 shows a configuration example of the DC breaker control unit 504 according to the embodiment of the invention.

As shown in FIG. 11, when a logical sum of the Fbp, Fbn, and FLx calculated by a logical sum calculation unit 1101 is 1, open commands are given to the DC breakers 103Xp and 103Xn provided on the X circuit-side DC lines. When a logical sum of the Fbp, Fbn, and FLy is 1, the open commands are given to the DC breakers 103Yp and 103Yn provided on the Y circuit-side DC lines.

Accordingly, by the accident detection and protection control shown in FIG. 5, in the case of the accident on the bus 107, the DC transmission conversion station 102 is cut off and disconnected from both the AC system and the DC system, and in the case of the accident on the DC line 103, only the DC line of the circuit is cut off and disconnected.

The conversion station protection control unit 503 and the DC breaker control unit 504 are capable of giving commands to and operate corresponding protection devices during the DC bus accident or the DC line accident. The above is the description of the conversion station protection control unit 503 and the DC breaker control unit 504.

In the description of the embodiment of the invention, the DC transmission conversion station has been described by exemplifying a configuration in which the DC lines include two circuits, but the invention also can be applied to DC lines including one circuit or three or more circuits.

According to the protection control device and the protection control method for the DC transmission system in the invention described above, only based on voltages and currents detected inside the DC transmission conversion station, accidents can be detected, and accidents inside and outside the DC transmission conversion station can be classified. Moreover, it is possible to determine an appropriate cut off range according to the classification of accidents inside and outside the DC transmission conversion station, and therefore partial continuous operation can be realized. Furthermore, by detecting the accidents only based on the voltages and currents detected in the DC transmission conversion station, it is not necessary to obtain information from external equipment via communication, which contributes to high-speed protection processing.

### Reference Sign List

- 101: AC system
- 102: DC transmission conversion station
- 103X: DC circuit X
- 103Y: DC circuit Y
- 103Xp: positive line of DC circuit X
- 103Xn: negative line of DC circuit X
- 103Yp: positive line of DC circuit Y
- 103Yn: negative line of DC circuit Y
- 104: AC bus
- 105: AC breaker
- 106: AC/DC converter
- 107: DC bus
- 108: DC reactor
- 109Xp: positive DC breaker of DC circuit X
- 109Xn: negative DC breaker of DC circuit X
- 109Yp: positive DC breaker of DC circuit Y
- 109Yn: negative DC breaker of DC circuit Y
- 301: unit converter
- 302: arm
- 303: reactor
- 304a: A-phase AC connection terminal
- 304b: B-phase AC connection terminal
- 304c: C-phase AC connection terminal
- 305a: DC positive connection terminal
- 305b: DC negative connection terminal
- 401: H-side switching circuit
- 402: L-side switching circuit
- 403: capacitor
- 404: H-side connection terminal
- 405: L-side connection terminal
- 501: DC bus accident detection unit
- 502: DC line accident detection unit
- 503: conversion station protection control unit
- 504: DC breaker control unit
- 601: ground fault
- 701: adder
- 702: subtractor
- 703: absolute value circuit
- 704: DC bus accident determination
- 801: DC line
- 802: reactor
- 1001: moving averaging unit
- 1002: subtractor
- 1003: absolute value circuit
- 1004: comparator
- 1005: DC line accident determination unit
- 1101: logical sum calculation unit

## Claims

1. A protection control device for a DC transmission system having a symmetrical unipolar configuration, the DC transmission system including a self-excited converter that converts AC to DC, a DC bus connected to a DC terminal of the self-excited converter, a plurality of DC breakers that connects the DC bus and a plurality of DC lines, and an AC breaker that connects AC terminals of the self-excited converter and an AC system, wherein
when a bus accident at a positive or negative terminal of the DC bus is detected based on a sum of currents flowing into the positive or negative terminal of the DC bus, the plurality of DC breakers and the AC breaker are opened, and when a line accident of the DC lines is detected based on ground potentials at positive or negative terminals of the DC lines, the DC breaker of a DC line where the accident is detected is opened.

2. The protection control device for a DC transmission system according to claim 1, wherein
when the bus accident at the positive or negative terminal of the DC bus is detected, the self-excited converter is gate-blocked.

3. The protection control device for a DC transmission system according to claim 1 or 2, wherein
when the line accident of the DC lines is detected based on the ground potentials at the positive or negative terminals of the DC lines, a decrease in absolute values of the ground potentials or a change rate of the absolute values of the ground potentials is monitored.

4. The protection control device for a DC transmission system according to any one of claims 1 to 3, wherein
when the bus accident is detected at the positive or negative terminal of the DC bus, a first current flowing into the DC bus from the self-excited converter and a second current at a connection point between the DC breaker and the DC line are detected, and then the accident at the DC bus is detected based on a difference between the first current and the second current.

5. A protection control method for a DC transmission system having a symmetrical unipolar configuration, the DC transmission system including a self-excited converter that converts AC to DC, a DC bus connected to a DC terminal of the self-excited converter, a plurality of DC breakers that connects the DC bus and a plurality of DC lines, and an AC breaker that connects AC terminals of the self-excited converter and an AC system, the protection control method comprising:
when a bus accident at the positive or negative terminal of the DC bus is detected based on a sum of currents flowing into the positive or negative terminal of the DC bus, opening the plurality of DC breakers and the AC breaker; and
when a line accident of the DC lines is detected based on ground potentials at positive or negative terminals of the DC lines, opening the DC breaker of a DC line where the accident is detected.
